# FASCICULE DE BREVET EUROPEEN

(11) **EP 1 019 331 B1**
(45) Date de publication et mention de la délivrance du brevet: **31.10.2001**
(21) Numéro de dépôt: 98942774.5
(22) Date de dépôt: 24.08.1998
(51) Int. Cl.: C02F 9/00

(54) **STATION D'EPURATION A STRUCTURE MODULAIRE AUTOPORTEUSE**
KLÄRANLAGE BESTEHEND AUS SELBSTTRAGENDEN MODULEN
TREATMENT PLANT WITH SELF-SUPPORTING MODULAR STRUCTURE

(30) Priorité: 25.08.1997 FR 9710769
(43) Date de publication de la demande: 19.07.2000
(73) Titulaire: Contardo, Jacques, 73000 Chambéry (FR)
(72) Inventeur: Contardo, Jacques, 73000 Chambéry (FR)
(74) Mandataire: Hecké, Gérard
(86) Numéro de dépôt international: FR9801841
(87) Numéro de publication internationale: WO9910287

(56) Documents cités:
- DE-A- 4 225 957
- GB-A- 1 086 342
- US-A- 4 857 183

## Description

### Domaine technique de l'invention

L'invention est relative à une station d'épuration pour le traitement d'effluents liquides pollués, comprenant une succession de cuves de traitement raccordées à un module décanteur destiné à séparer les boues liquides de l'eau claire du liquide surnageant évacué à travers un dispositif de surverse, un agent chimique étant injecté dans chaque cuve de traitement pour effectuer une réaction chimique prédéterminée en fonction de la nature de l'effluent à traiter, les cuves de traitement comportant au moins un module d'entrée des effluents et / ou un module de sortie du liquide surnageant, respectivement situés au-dessus et en dessous du module décanteur pour permettre l'écoulement du liquide par gravité à partir du module d'entrée.

### Etat de la technique

Les stations d'épuration classiques sont généralement constituées par des installations complexes de plusieurs cuves de traitement installées horizontalement sur le sol, et reliées entre elles par une multitude de canalisations interconnectées entre elles par des vannes et des pompes de reprise. La surface du sol occupée par ces installations est très grande, qui nécessite un dispositif d'alimentation des pompes en énergie électrique, et un travail de maintenance permanent. Le coût de montage et d'exploitation de ces installations est très élevé.

Les documents GB 1086342 et US 4857183 décrivent des stations d'épuration avec des cuves superposées autorisant l'écoulement du liquide par gravité. L'architecture de telles stations d'épuration n'est cependant pas modulaire et évolutif, et ne permet pas un montage aisé sur site.

### Objet de l'invention

L'objet de l'invention consiste à réaliser une station d'épuration à encombrement et entretien réduits, et bénéficiant d'une structure compacte évolutive en fonction de la nature et du débit d'effluents à traiter.

La station d'épuration selon l'invention est caractérisée en ce que :
les cuves de traitement comportent des moyens de liaison complémentaires agences aux extrémités opposées pour permettre l'empilage des différents modules dans le sens de la hauteur en constituant une structure modulaire autoporteuse prenant appui sur le sol, l'interconnexion hydraulique entre les modules superposés étant réalisée automatiquement lors du montage pour assurer ledit écoulement par gravité.

L'écoulement des effluents dans les différentes cuves s'effectue automatiquement par gravité, suite à l'emboîtement des modules dans le sens de la hauteur. La livraison des modules en kit permet un montage aisé sur le site, avec autoconnexion hydraulique des différentes cuves entre elles lors de l'empilage des modules.

Selon une caractéristique de l'invention, le premier module d'entrée comporte un tuyau d'évacuation destiné à s'emboîter lors de l'empilage dans une canalisation verticale du module décanteur pour canaliser les boues liquides vers le fond de l'entonnoir disposé à l'opposé du dispositif de surverse.

Selon un mode de réalisation préférentiel, la cuve du premier module d'entrée est partagée par une cloison de séparation en deux compartiments adjacents comprenant un compartiment de neutralisation dans lequel est injecté un mélange neutralisant, et un compartiment de floculation recevant un agent floculant et servant de logement au tuyau d'évacuation monté à emboîtement dans ladite canalisation du module décanteur.

Au moins un autre module d'entrée est disposé au-dessus du premier module d'entrée avec connexion en parallèle par leurs entrées distinctes. Chaque module d'entrée comporte un agitateur mécanique, et des moyens de mesure du pH et / ou du rH coopérant avec des moyens de régulation pour injecter une dose prédéterminée d'agent chimique ou biologique dans le compartiment correspondant.

Selon une autre caractéristique, l'entonnoir de réception des boues du module de décantation est agencé selon un W, dans lequel chaque fond en V forme un angle aigu de l'ordre de 60°, et est raccordé à un tuyau d'extraction.

Le dispositif de surverse comprend un profilé linéaire en U assujetti par un organe de réglage à la cuve du module décanteur pour ajuster avec précision la position horizontale dudit dispositif de surverse.

Les différentes cuves de la station d'épuration sont réalisées en acier inoxydable, ou en matière plastique, et comportent des sections quelconques notamment circulaires ou rectangulaires.

### Description sommaire des figures

D'autres avantages et caractéristiques ressortiront plus clairement de la description qui va suivre d'un mode de réalisation de l'invention, donné à titre d'exemple non limitatif, et représenté aux dessins annexés dans lesquels :
- la figure 1 est une vue en élévation d'une station d'épuration selon l'invention,
- les figures 2 et 3 représentent des vues en coupe longitudinale et transversale de la figure 1 ;
- les figures 4 à 6 sont des vues en coupe selon les lignes 4-4, 5-5, 6-6 respectives des figures 2, 1 et 6 ;
- la figure 7 est une vue schématique à échelle agrandie de la station de la figure 3 ;
- la figure 8 montre un détail de réalisation de la figure 7 ;
- la figure 9 est une vue en coupe selon la ligne 9-9 de la figure 2, illustrant le dispositif de surverse ;
- la figure 10 représente une vue en plan de la figure 9 ;
- la figure 11 est une vue identique de la figure 1 d'une variante de réalisation;
- la figure 12 montre une vue en coupe selon la ligne 12-12 de la figure 11 ;
- la figure 13 est une vue de profil de la figure 11 ;
- la figure 14 montre une vue en plan selon la ligne 14-14 de la figure 13 ;
- la figure 15 est une vue identique de la figure 14 d'une variante de réalisation ;
- la figure 16 représente le flux de cheminement des effluents à travers les différentes étages de la station d'épuration de la figure 12 ;
- la figure 17 est une vue identique de la figure 16 d'une autre variante de réalisation.

### Description de modes de réalisations préférentiels

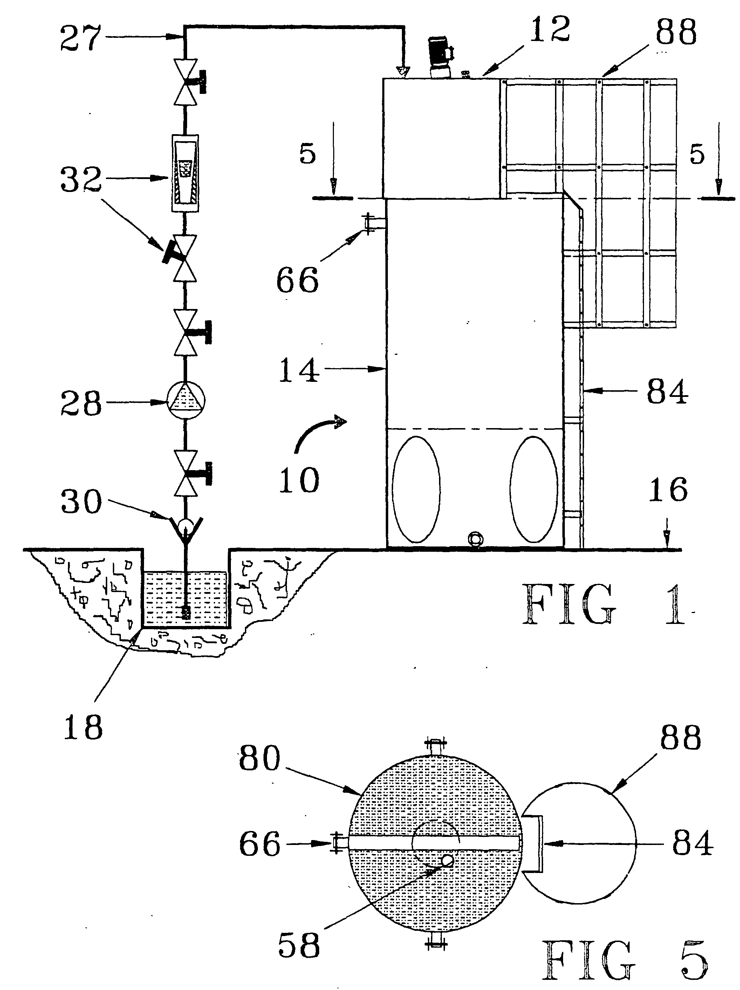

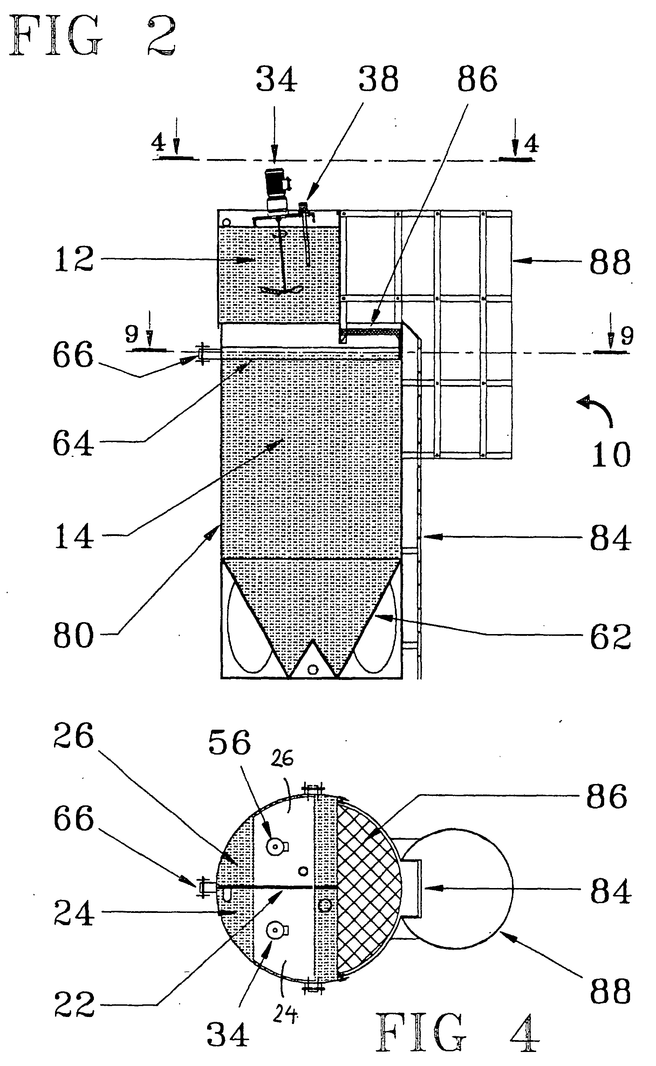

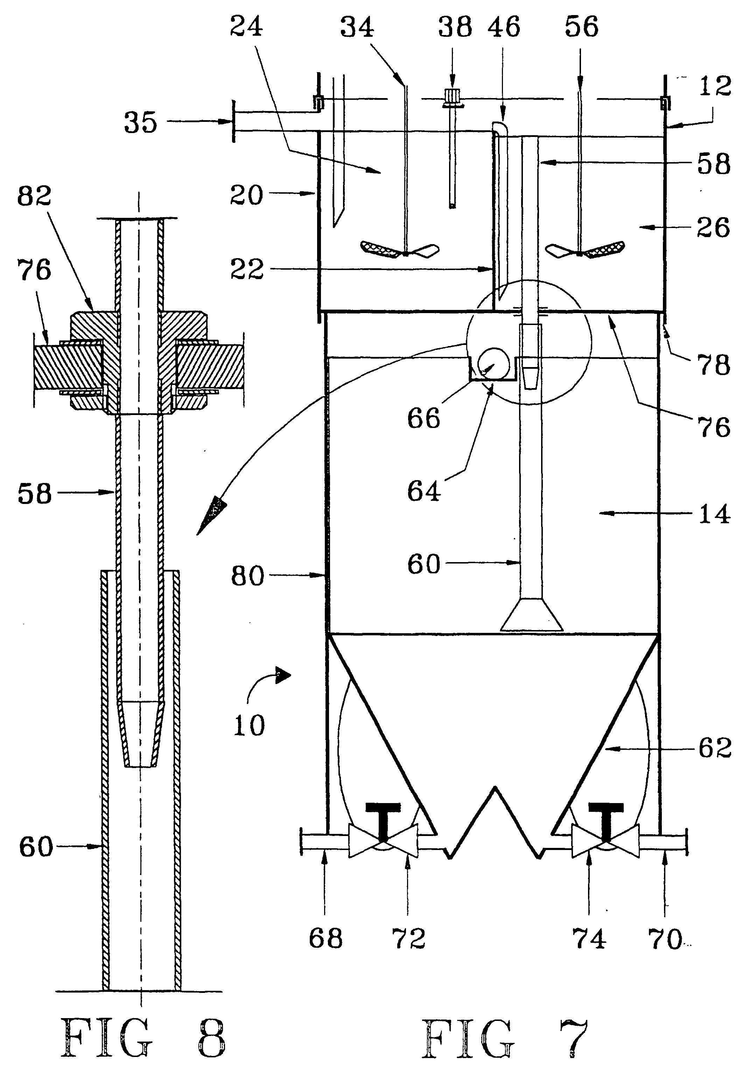

En référence aux figures 1 à 8, une station d'épuration 10 modulaire pour le traitement d'effluents, notamment de rinçage et de lavage des sols, comporte un premier module d'entrée 12 disposé par emboîtement au-dessus d'un module de décantation 14, de manière à constituer une structure autoporteuse prenant appui sur le sol 16. Les effluents à traiter sont stockés dans un bassin 18 enterré, lequel comprend des cloisons siphoïdes (non représentées) servant de décanteur primaire. Le bassin 18 sert également de fosse de sécurité en cas d'un dysfonctionnement de la station 10, ou lors d'une rupture d'une tubulure avant le traitement des eaux.

Le premier module d'entrée 12 comporte une cuve 20 partagée par une cloison 22 verticale intermédiaire en deux compartiments 24, 26 adjacents, à savoir le compartiment de neutralisation 24, et le compartiment de floculation 26. Une tubulure d'alimentation 27 renferme au moins une pompe de relevage 28 asservie à des niveaux haut et bas, et un clapet anti-retour 30 pour l'aspiration des effluents du bassin 18 vers le réacteur de neutralisation du compartiment 24. La tubulure 27 renferme des moyens de régulation 32, par exemple un débitmètre associé à une vanne de réglage, pour ajuster le débit d'alimentation de la station d'épuration 10.

Les eaux acheminées dans le réacteur de neutralisation du compartiment 24 sont agitées en permanence au moyen d'un premier agitateur mécanique 34, et régulées à un pH programmé par ajout d'un mélange neutralisant à base d'acide, ou de produits alcalins, par exemple soude, chaux, chlorure de calcium, seuls ou mélangés.

Le mélange neutralisant est injecté dans le compartiment 24 par une tubulure de refoulement 35 d'une première pompe doseuse 36 pilotée par un ensemble capteur 38 régulateurde pH, et reliée par une tubulure d'admission 40 à un récipient 42 rempli de l'agent de neutralisation. La chaux ou le chlorure de calcium permettent d'obtenir la précipitation des ions fluorures.

Après l'opération de neutralisation des effluents dans le compartiment de neutralisation 24, une chicane 44 du compartiment 24 ramène les eaux neutralisées vers l'admission d'un tuyau de liaison 46, lequel s'étend verticalement dans l'autre compartiment de floculation 26. Une deuxième pompe doreuse 48 asservie à la pompe de relevage 28, injecte d'autre part un agent floculant dans le compartiment 26 par l'intermédiaire d'une tubulure de refoulement 50. La tubulure d'admission 52 de la deuxième pompe doseuse 48 est connectée à un réservoir 54 rempli par un agent de floculation.

Le compartiment de floculation 26 est équipé d'un deuxième agitateur mécanique 56 à vitesse lente, et l'agent de floculation est à base d'un polymère électrolytique, ou d'un sulfate métallique pour favoriser la floculation et la décantation des particules en suspension des hydroxydes métalliques, et des sels de calcium.

Les eaux floculées s'écoulent par gravité vers le module de décantation 14 par l'intermédiaire d'un tuyau d'évacuation 58 emboîté dans une canalisation 60 alignée dans le sens vertical pour amener le mélange eau et floc vers la partie inférieure du module de décantation 14. Les boues liquides sont acheminées gravitairement vers le fond de l'entonnoir 62 du module de décantation, tandis que l'eau claire du liquide surnageant se déverse à la partie supérieure dans un dispositif de surverse 64 raccordé à un tuyau de sortie 66.

L'entonnoir 62 de réception des boues est avantageusement conformé selon un W, dans lequel chaque fond en V est raccordé à un tuyau d'extraction 68, 70 par l'intermédiaire d'une vanne d'arrêt 72, 74. Chaque fond en V de l'entonnoir 62 comprend un angle aigu de l'ordre de 60° évitant toute formation d'un pont de boues.

La cuve 20 du premier module d'entrée 12 est dotée d'un fond 76 plat équipé de moyens de liaison ou d'accouplement 78 complémentaires avec la partie supérieure de la cuve 80 du module de décantation 14 pour permettre l'empilage des deux modules 12, 14 lors de l'emboîtement du tuyau d'évacuation 58 dans la canalisation 60. L'interconnexion hydraulique des deux modules 12, 14 est ainsi réalisée automatiquement lors du montage sans moyens additionnels de raccordement , et l'écoulement des eaux depuis le module d'entrée 12 jusqu'au tuyau d'extraction 68, 70 du module de décantation 14 s'effectue par gravité. Le tuyau d'évacuation 58 traverse le fond 76 au moyen d'un embout 82 étanche.

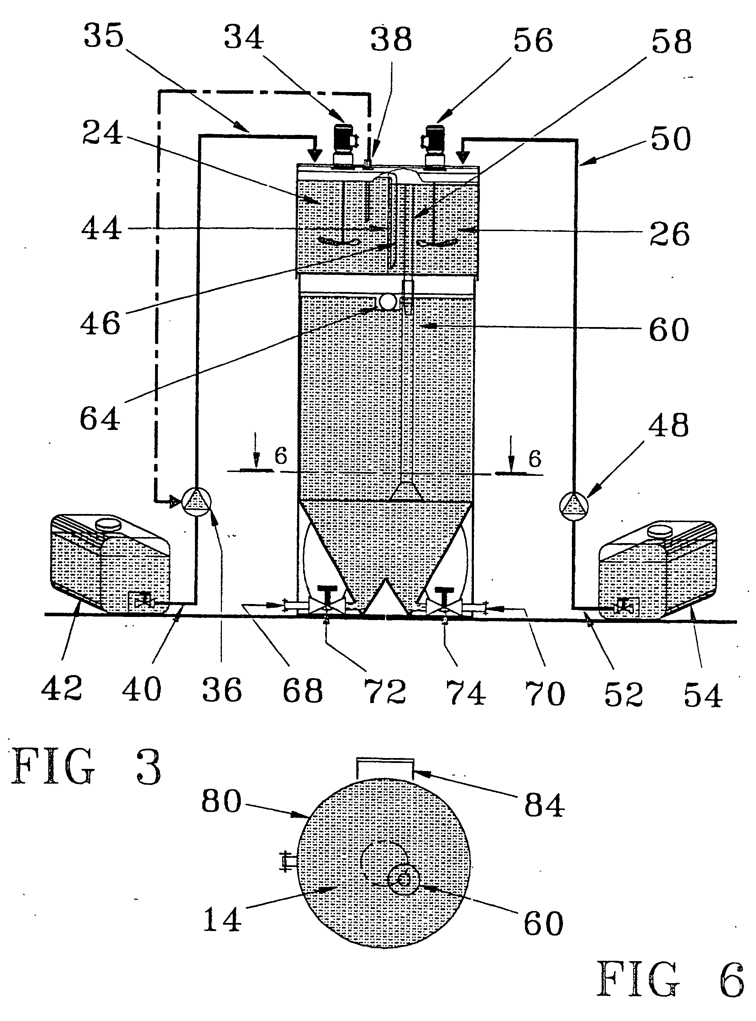

Une échelle 84 permet d'accéder à une plate-forme 86 en caillebotis au niveau de la zone de liaison des deux modules 12, 14 pour contrôler le bon fonctionnement de la station 10. La plate-forme 86 est entourée au moyen d'une balustrade de protection 88. La section de la cuve 80 du module de décantation 14 et cylindrique dans le cas d'exemple de la figure 6, tandis que celle du premier module d'entrée 12 présente une section sensiblement semi-cylindrique (figure 4), le secteur cylindrique complémentaire étant occupé par la plate-forme 86.

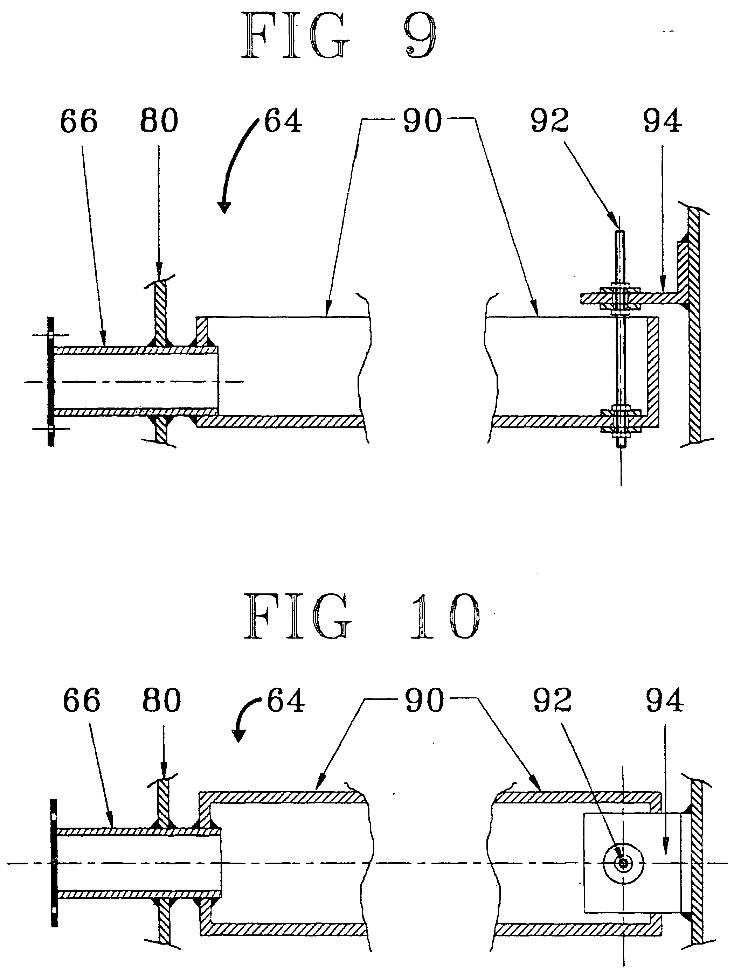

Sur les figures 9 et 10, le dispositif de surverse 64 est formé par un profilé 90 linéaire en U, dont l'extrémité de gauche est soudée à la cuve 80 et au tuyau de sortie 66, tandis que l'extrémité de droite est pourvue d'un organe de réglage, notamment d'une tige filetée 92 coopérant avec une patte de fixation 94 pour ajuster avec précision la position horizontale du dispositif de surverse 64.

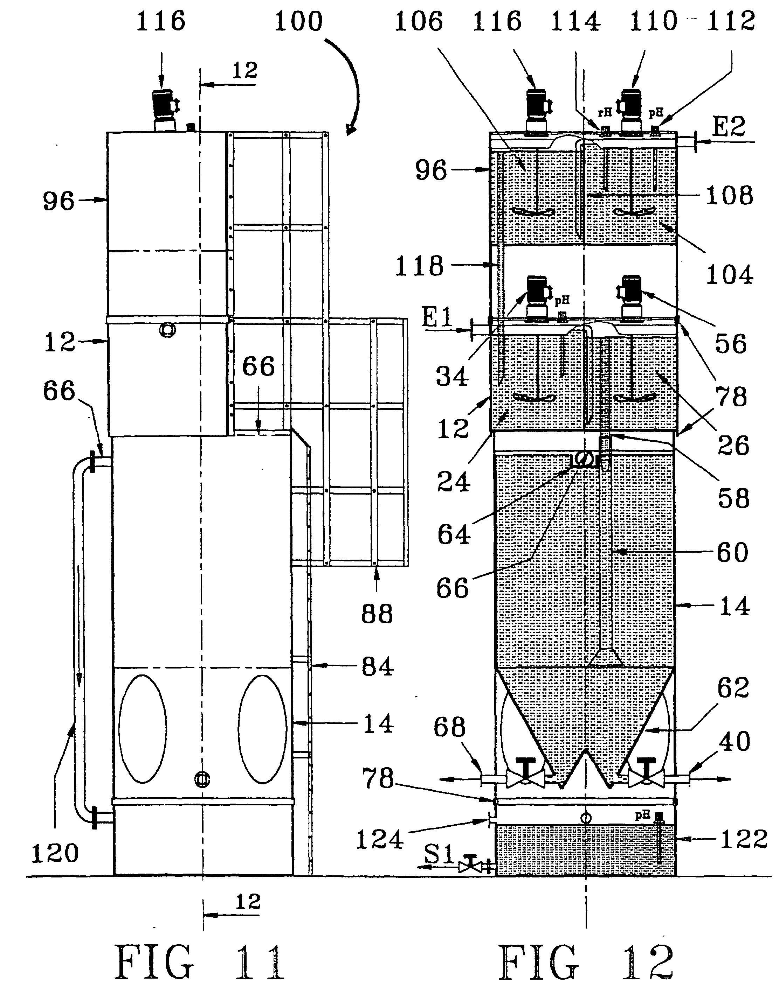

En fonction de la nature des effluents à traiter, il est possible de rajouter un deuxième module d'entrée 96 sur le premier module d'entrée 12 (figures 11 à 13). La surface d'encombrement du sol reste identique, seule la hauteur de la station d'épuration 100 augmente suite à l'adjonction du deuxième module d'entrée 96, alors que le premier module d'entrée 12 et le module de décantation restent identiques à ceux du premier mode de réalisation des figures 1 à 10.

Le premier module d'entrée 12 reçoit à l'entrée E1 le même type d'effluents que ceux de la station 10 des figures 1 à 7, par exemples des effluents pollués acide-basiques.

Un autre type d'effluent par exemple à base de cyanures ou de chrome nécessitant un traitement complémentaire, peut être introduit en amont dans l'entrée E2 du deuxième module 96. La cuve 102 de ce dernier présente une forme similaire à celle 20 du premier module d'entrée 12, et est partagée en deux compartiments 104, 106 adjacents par une cloison 108 de séparation. Le premier compartiment 104 raccordé à l'entrée E2, est équipé d'un troisième agitateur mécanique 110, et de moyens de mesure 112, 114 du pH et du rH destinés à assurer la décyanuration ou la déchromatation des effluents, grâce à l'injection dosée de réactifs. Les eaux passent ensuite dans le deuxième compartiment de post-réaction 106 équipé d'un quatrième agitateur mécanique 116. Il en résulte une réduction des chromes ou un oxydation des cyanures, avec un écoulement par gravité du liquide traité à travers un tuyau d'évacuation 118 interne qui plonge verticalement dans le réacteur de neutralisation 24 du premier module d'entrée 12. Il se mélange avec les effluents injectés par l'entrée E1, et subit ensuite les mêmes opérations de neutralisation, de floculation, et de décantation décrites en référence aux figures 1 à 8.

Les eaux claires ascendantes sont collectées par le dispositif de surverse 64, et acheminées à travers une conduite extérieure 120 raccordée au tuyau de sortie 66 vers un module de sortie 122 disposée sous le module de décantation 14. De l'air surpressé peut être introduit dans le module de sortie 122 pour assurer une oxygénation finale de l'eau avant le rejet ou l'éxutoire. Un trop-plein 124 est avantageusement installé sur le module de sortie 122.

L'ensemble des modules élémentaires 122, 14, 12, 96 de la station d'épuration 100 sont emboîtés les uns sur les autres, et les eaux à traiter s'écoulent par gravité depuis l'entrée E2 jusqu'à la sortie S1. Les boues sont récupérées aux tuyaux d'extraction 68, 70, et peuvent passer dans un filtre-presse extérieur (non représenté) avant leur évacuation vers une décharge adaptée.

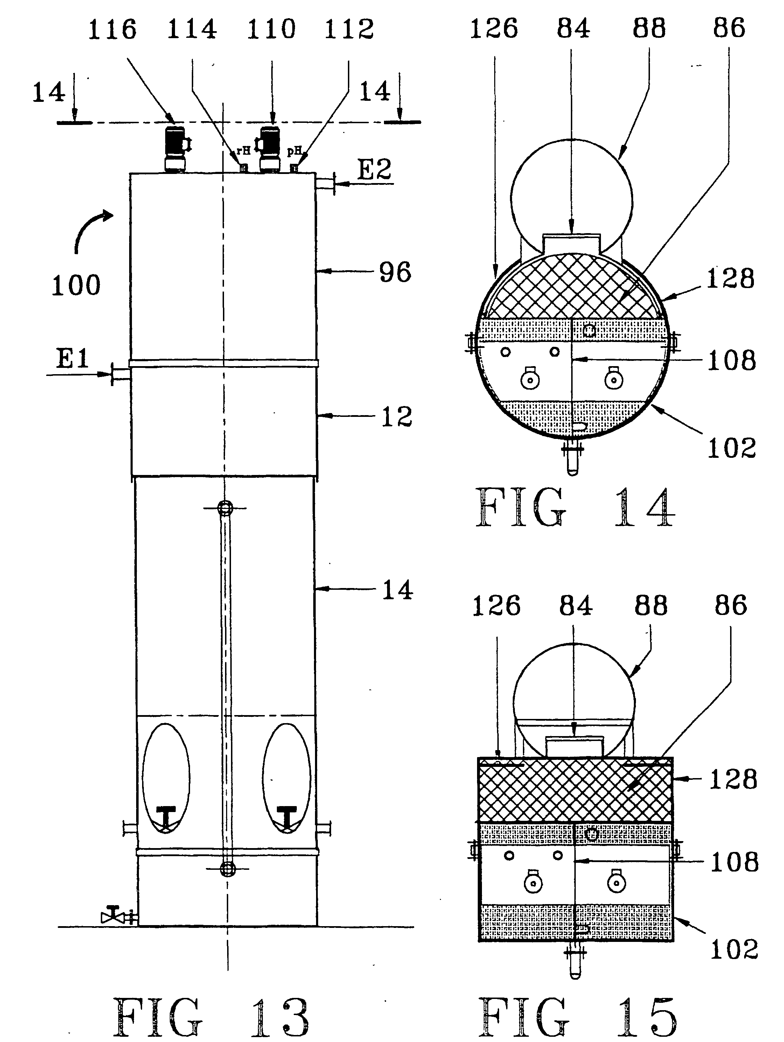

Sur la figure 14, les surfaces latérales des cuves 102 et 20 des modules d'entrée 12, 96 peuvent être prolongées par des flasques 126, 128 en forme de segments circulaires enveloppant la plate-forme 86.

Les modules élémentaires de la station d'épuration peuvent également avoir des sections autres que circulaires, par exemple rectangulaires ou carrées (figure 15).

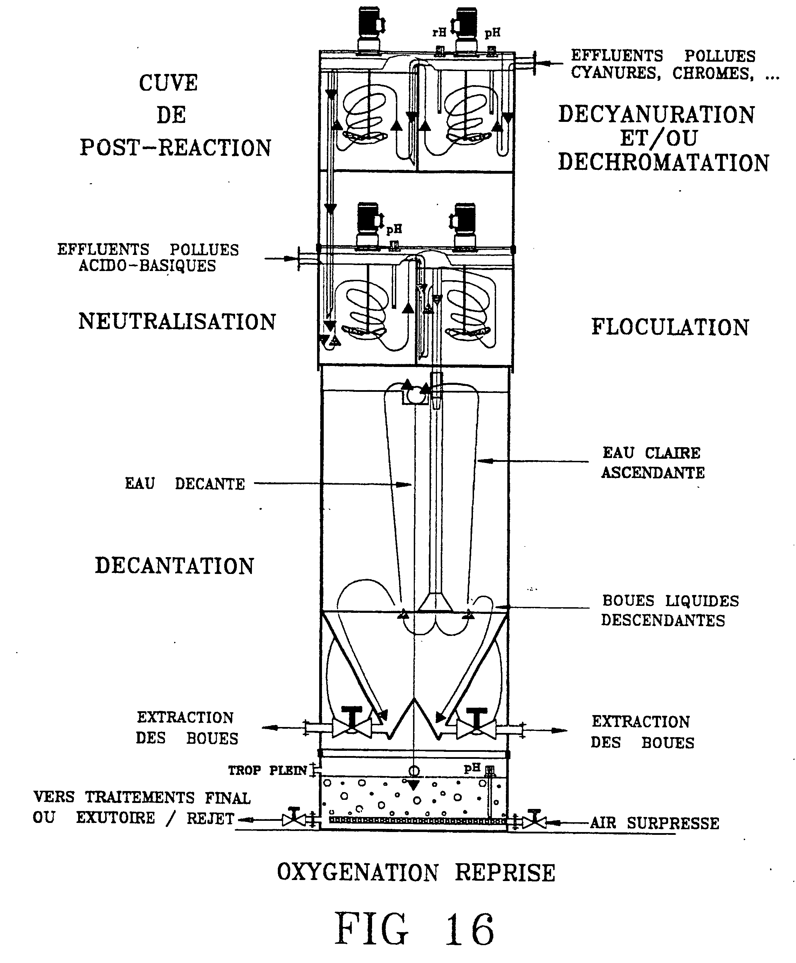

La figure 16 est une vue identique de la station d'épuration 100 illustrée à la figure 12, avec indication du flux de cheminement des effluents à travers les différents étages des modules.

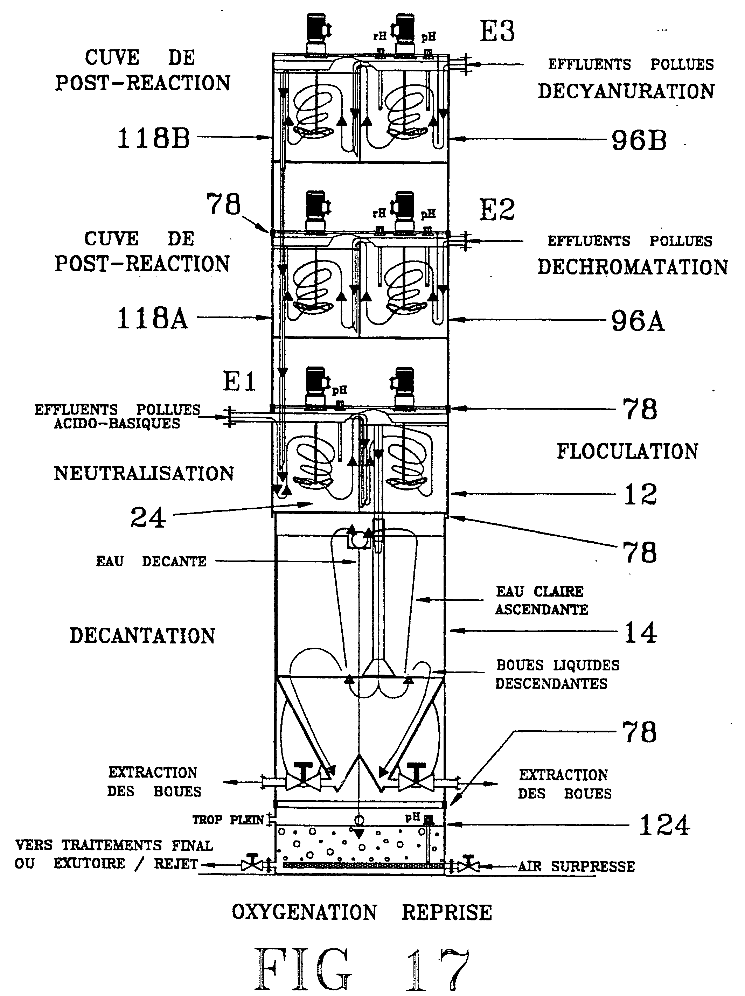

La figure 17 montre une autre station d'épuration 200, similaire à la station 100 des figures 11 à 16, avec une subdivision du module 96 en deux modules 96A, 96B identiques superposés, et connectés en parallèle. Le module d'entrée 96A est un module spécifique de déchromatation ayant une entrée distincte de celle du module 96B constituant un module spécifique de décyanuration. Les deux tuyaux d'évacuation 118A, 118B des deux modules 96A, 96B sont alignés selon la direction verticale, et la somme de leur débit est injectée dans le module de neutralisation 24. Le reste du fonctionnement es identique à celui de la station 100 de la figure 12.

La structure modulaire empilable des différentes stations d'épuration 10, 100, 200 permet une livraison en kit. Toutes les canalisations sont en matière plastique pour garantir les exigences d'anticorrosion.

## Revendications

1. Station d'épuration (10, 100, 200) pour le traitement d'effluents liquides pollués, comprenant une succession de cuves de traitement raccordées à un module décanteur (14) destiné à séparer les boues liquides de l'eau claire du liquide surnageant évacué à travers un dispositif de surverse (64), un agent chimique étant injecté dans chaque cuve de traitement pour effectuer une réaction chimique prédéterminée en fonction de la nature de l'effluent à traiter, les cuves de traitement (20, 102) comportant au moins un module d'entrée (12, 96, 96A, 96B) des effluents et / ou un module de sortie (122) du liquide surnageant, respectivement situés au-dessus et en dessous du module décanteur (14) pour permettre l'écoulement du liquide par gravité à partir du module d'entrée,
**caractérisée en ce que** les cuves de traitement comportent des moyens de liaison (78) complémentaires agencés aux extrémités opposées pour permettre l'empilage des différents modules (12, 14, 96, 96A, 96B, 122) dans le sens de la hauteur en constituant une structure modulaire autoporteuse prenant appui sur le sol, l'interconnexion hydraulique entre les modules superposés étant réalisée automatiquement lors du montage pour assurer ledit écoulement par gravité.

2. Station d'épuration selon la revendication 1, **caractérisée en ce que** le premier module d'entrée (12) comporte un tuyau d'évacuation (58) destiné à s'emboîter lors de l'empilage dans une canalisation (60) verticale du module décanteur (14) pour canaliser les boues liquides vers le fond de l'entonnoir (62) disposé à l'opposé du dispositif de surverse (64).

3. Station d'épuration selon la revendication 2, **caractérisée en ce que** la cuve (20) du premier module d'entrée (12) est partagée par une cloison de séparation (22) en deux compartiments adjacents comprenant un compartiment de neutralisation (24) dans lequel est injecté un mélange neutralisant, et un compartiment de floculation (26) recevant un agent floculant et servant de logement au tuyau d'évacuation (58) monté à emboîtement dans ladite canalisation (60) du module décanteur (14).

4. Station d'épuration selon la revendication 3, **caractérisée en ce que** au moins un autre module d'entrée (96, 96A, 96B) est disposé au-dessus du premier module d'entrée (12) avec une connexion en parallèle par leurs entrées distinctes (E1, E2, E3).

5. Station d'épuration selon la revendication 1, **caractérisée en ce que** chaque module d'entrée (12, 96, 96A, 96B) comporte un agitateur mécanique (34, 56, 116, 110), et des moyens de mesure (38, 112, 114) du pH et / ou du rH coopérant avec des moyens de régulation (36, 48) pour injecter une dose prédéterminée d'agent chimique ou biologique dans le compartiment correspondant.

6. Station d'épuration selon la revendication 1, **caractérisée en ce que** l'entonnoir (62) de réception des boues du module de décantation (14) est agencé selon un W, dans lequel chaque fond en V forme un angle aigu de l'ordre de 60°, et est raccordé à un tuyau d'extraction (68, 70).

7. Station d'épuration selon la revendication 1, **caractérisée en ce que** le dispositif de surverse (64) comprend un profilé (90) linéaire en U assujetti par un organe de réglage (92) à la cuve (80) du module décanteur (14) pour ajuster avec précision la position horizontale dudit dispositif de surverse (64).

8. Station d'épuration selon la revendication 1, **caractérisée en ce que** les différentes cuves de la station d'épuration (10, 100, 200) sont réalisées en acier inoxydable, ou en matière plastique, et comportent des sections quelconques notamment circulaires ou rectangulaires.

9. Station d'épuration selon la revendication 1, **caractérisée en ce que** le module de sortie (122) est situé sous le module décanteur (14), et est raccordé au dispositif de surverse (64) par une conduite extérieure (120).

## Patentansprüche

1. Kläranlage (10, 100, 200) zur Reinigung von verunreinigten, flüssigen Abwässern, die eine Folge von Behandlungsbecken umfasst, die mit einem Vorklärbecken (14) verbunden sind, das dazu bestimmt ist, die flüssigen Schlämme von dem aufschwimmenden klaren Wasser zu trennen, das durch einen Überlauf (64) abgeführt wird, wobei in jedes Behandlungsbecken ein chemisches Reagenzmittel eingeleitet wird, das eine entsprechend den Eigenschaften des zu behandelnden Abwassers vorbestimmte chemische Reaktion auslösen soll, wobei die Behandlungsbecken (20, 102) mindestens ein Eingangsmodul (12, 96, 96A, 96B) für das Abwasser und/oder ein Ausgangsmodul (122) für die aufschwimmende Flüssigkeit umfassen, die jeweils oberhalb bzw. unterhalb des Vorklärbeckens (14) angeordnet sind, um das Ablaufen der Flüssigkeit von dem Eingangsmodul aus mittels Schwerkraft zu ermöglichen,
**dadurch gekennzeichnet, dass** die Behandlungsbecken komplementäre Verbindungsvorrichtungen (78) aufweisen, die an den entgegengesetzten Enden angeordnet sind, um das Anordnen der einzelnen Module (12, 14, 96, 96A, 96B, 122) übereinander in Höhenrichtung zu erlauben, sodass sie einen selbsttragenden, modularen Aufbau bilden, der auf dem Boden aufliegt, wobei die hydraulische Verbindung zwischen den übereinander angeordneten Modulen automatisch bei der Montage hergestellt wird, um das genannte Ablaufen mittels Schwerkraft zu gewährleisten.

2. Kläranlage nach Anspruch 1, **dadurch gekennzeichnet, dass** das erste Eingangsmodul (12) ein Abzugsrohr (58) umfasst, das dazu bestimmt ist, beim Aufeinanderstellen auf eine vertikale Leitung (60) des Vorklärmoduls (62) gesteckt zu werden, um die flüssigen Schlämme zum Boden des Trichters (62) zu lenken, der entgegengesetzt zum Überlauf (64) angeordnet ist.

3. Kläranlage nach Anspruch 2, **dadurch gekennzeichnet, dass** das Bekken (20) des ersten Eingangsmoduls (12) durch eine Trennwand (22) in zwei aneinander grenzende Becken geteilt ist, die ein Neutralisationsbecken (24) umfassen, in das ein neutralisierendes Gemisch eingeleitet wird, sowie ein Ausflockungsbecken (26), in das ein Flockungsmittel (26) gegeben wird und das das Abzugsrohr (58) aufnimmt, das auf die Leitung (60) des Vorklärbeckens (14) aufgesteckt ist.

4. Kläranlage nach Anspruch 3, **dadurch gekennzeichnet, dass** mindestens ein weiteres Eingangsmodul (96, 96A, 96B) oberhalb des ersten Eingangsmoduls (12) angeordnet ist, mit einer parallelen Verbindung durch ihre unterschiedlichen Eingänge (E1, E2, E3).

5. Kläranlage nach Anspruch 1, **dadurch gekennzeichnet, dass** jedes Eingangsmodul (12, 96, 96A, 96B) ein mechanisches Rührwerk (34, 56, 116, 110) und Vorrichtungen (38, 112, 114) zum Messen des pH-Werts und/oder rH-Werts umfasst, die mit Regulierungsvorrichtungen (36, 48) zum Einleiten einer vorbestimmten Menge eines chemischen oder biologischen Reagenzmittels in dem jeweiligen Becken zusammenwirken.

6. Kläranlage nach Anspruch 1, **dadurch gekennzeichnet, dass** der Trichter (62), der die Schlämme des Vorklärbeckens (14) aufnimmt, in Form eines W vorgesehen ist, bei dem jeder V-förmige Boden einen spitzen Winkel von etwa 60° bildet und an ein Abzugsrohr (68, 70) angeschlossen ist.

7. Kläranlage nach Anspruch 1, **dadurch gekennzeichnet, dass** der Überlauf (64) ein U-förmiges Linearprofil (90) umfasst, das über eine Regelvorrichtung (92) von dem Becken (80) des Vorklärmoduls (14) abhängig ist, um die horizontale Position des Überlaufs (64) genau anzupassen.

8. Kläranlage nach Anspruch 1, **dadurch gekennzeichnet, dass** die einzelnen Becken der Kläranlage (10, 100, 200) aus INOX-Stahl oder Kunststoff bestehen und beliebige, insbesondere kreisförmige oder rechtwinklige Querschnitte aufweisen.

9. Kläranlage nach Anspruch 1, **dadurch gekennzeichnet, dass** das Ausgangsmodul (122) unter dem Vorklärmodul (14) angeordnet und über eine Außenleitung (120) mit dem Überlauf (64) verbunden ist.

## Claims

1. A treatment plant (10, 100, 200) for treatment of polluted liquid effluents comprising a succession of treatment tanks connected to a decanting module (14) designed to separate the sludge from the clean water of the supernatant liquid removed via an overflow device (64), a chemical agent being injected into each treatment tank to perform a predetermined chemical reaction according to the nature of the effluent to be treated, the treatment tanks (20, 102) comprising at least one inlet module (12, 96, 96A, 96B) of the effluents and / or an outlet module (122) of the supernatant liquid, respectively situated above and below the decanting module (14) to enable the liquid to flow by gravity from the inlet module,
**characterized in that** the treatment tanks comprise complementary connecting means (78) arranged at the opposite ends to enable heightwise stacking of the different modules (12, 14, 96, 96A, 96B) constituting a self-supporting modular structure bearing on the ground, hydraulic interconnection between the superposed modules being performed automatically when assembly takes place to ensure said flow by gravity.

2. The treatment plant according to claim 1, **characterized in that** the first inlet module (12) comprises a discharge pipe (58) designed to engage when stacking is performed in a vertical duct (60) of the decanting module (14) to channel the sludge towards the bottom of the funnel (62) arranged opposite the overflow device (64).

3. The treatment plant according to claim 2, **characterized in that** the tank (20) of the first inlet module (12) is divided by a separating partition (22) into two adjacent compartments comprising a neutralisation compartment (24) into which a neutralising mixture is injected, and a flocculation compartment (26) receiving a flocculating agent and acting as housing for the discharge pipe (58) engaged in said duct (60) of the decanting module (14).

4. The treatment plant according to claim 3, **characterized in that** at least one other inlet module (96, 96A, 96B) is arranged above the first inlet module (12) with parallel connection via their distinct inlets (E1, E2, E3).

5. The treatment plant according to claim 1, **characterized in that** each inlet module (12, 96, 96A, 96B) comprises a mechanical stirrer (34, 56, 116, 110) and measuring means (38, 112, 114) for measuring the pH and / or the rH, operating in conjunction with regulating means (36, 48) to inject a predetermined dose of chemical or biological agent into the corresponding compartment.

6. The treatment plant according to claim 1, **characterized in that** the funnel (62) receiving the sludge from the decanting module (14) is arranged in the form of a W in which each V-shaped bottom forms an acute angle of about 60° and is connected to an extraction pipe (68, 70).

7. The treatment plant according to claim 1, **characterized in that** the overflow device (64) comprises a U-shaped linear profiled section (90) secured by an adjusting means (92) to the tank (80) of the decanting module (14) to perform precise adjustment of the horizontal position of said overflow device (64).

8. The treatment plant according to claim 1, **characterized in that** the different tanks of the treatment plant (10, 100, 200) are made of stainless steel or of plastic material and comprise cross-sections of any shape in particular circular or rectangular.

9. The treatment plant according to claim 1, **characterized in that** the outlet module (122) is situated under the decanting module (14) and is connected to the overflow device (64) by an external duct (120).
